Europäisches Patentamt

**European Patent Office**

**Office européen des brevets**

(19)

(11) Numéro de publication: **0 075 503**
A1

(12)

# DEMANDE DE BREVET EUROPEEN

(21) Numéro de dépôt: **82401632.3**

(22) Date de dépôt: **06.09.82**

(51) Int. Cl.³: **H 04 M 3/62**

(30) Priorité: **09.09.81 FR 8117101**

(43) Date de publication de la demande: **30.03.83**
**Bulletin 83/13**

(84) Etats contractants désignés: **AT BE CH DE GB IT LI LU NL SE**

(71) Demandeur: **COMPAGNIE DE SIGNAUX ET D'ENTREPRISES ELECTRIQUES, 17, place Etienne-Pernet, F-75738 Paris Cedex 15 (FR)**

(72) Inventeur: **Dollo, Gérard, 2, rue Paul Hochart, F-94150 Chevilly Larue (FR)**
Inventeur: **Klein, Denys, 79, rue de Paris, F-91400 Orsay (FR)**

(74) Mandataire: **Chameroy, Claude et al, c/o Cabinet Malemont 42, avenue du Président Wilson, F-75116 Paris (FR)**

(54) **Pupitre d'autocommutateur téléphonique.**

(57) Pupitre destinée à l'exploitation de réseaux téléphoniques spécialisés dans les opérations bancaires ou les opérations de courtage de monnaies, de denrées ou de matières premières, caractérisé en ce qu'il comprend un panneau de visualisation alphanumérique (EV) sur lequel apparaissent en clair les identités des appelants.

EP 0 075 503 A1

## Pupitre d'autocommutateur téléphonique

La présente invention concerne un pupitre d'autocommutateur téléphonique, destiné notamment à l'exploitation de réseaux téléphoniques spécialisés dans les opérations bancaires ou les opérations de courtage de monnaies, de denrées ou de matières premières.

Les pupitres de ce genre utilisés par les cambistes, courtiers, commissionnaires ou autres comportent généralement un grand nombre de boutons poussoirs et de voyants lumineux. Chaque ligne téléphonique étant matérialisée par un bouton d'appel et un voyant annonciateur d'appel, on conçoit que la surface nécessaire à l'implantation des boutons et des voyants croisse proportionnellement au nombre de lignes.

Avec l'accroissement des échanges commerciaux et bancaires à l'échelle nationale et internationale, une telle disposition s'avère incommode, tant pour le fabricant que pour l'exploitant. De plus, l'astreinte du personnel qui doit faire face à un nombre accru de correspondants, rend difficile la hiérarchisation des appels et le traitement rapide des ordres.

Enfin, les risques de pannes sont augmentés par la multiplication des composants et le bilan de fiabilité du système s'en trouve détérioré.

La présente invention a pour but principal de remédier à ces inconvénients et, pour ce faire, elle a pour objet un pupitre d'autocommutateur téléphonique qui se caractérise essentiellement en ce qu'il comprend un panneau de visualisation alphanumérique sur lequel apparaissent en clair les identités des appelants.

Grâce à cette disposition, tous les voyants annonciateurs d'appels qui étaient nécessaires avec les pupitres utilisés jusqu'à maintenant, se trouvent remplacés par un unique panneau de visualisation alphanumérique, présentant, en langage immédiatement intelligible, la provenance des appels et les transferts.

Dans une forme de réalisation particulière de l'invention, le panneau de visualisation est associé à au moins un clavier à touches permettant entre autres de sélectionner à volonté l'un des appelants par frappe de son code qui figure également en clair sur ledit panneau.

Dans une variante perfectionnée de l'invention le panneau de visualisation est constitué par un écran interactif permettant de sélectionner l'appelant souhaité par simple pression du doigt dans la zone de l'écran où apparaît l'identité dudit appelant, ce qui facilite évidemment considérablement le travail de l'opérateur.

Une forme d'exécution de l'invention est décrite ci-après à titre d'exemple, en référence aux dessins annexés dans lesquels :

      - la figure 1 est une vue en plan du panneau de visualisation équipant le pupitre d'autocommutateur téléphonique conforme à l'invention; et

      - la figure 2 est une vue en plan du clavier à touches associé à ce panneau.

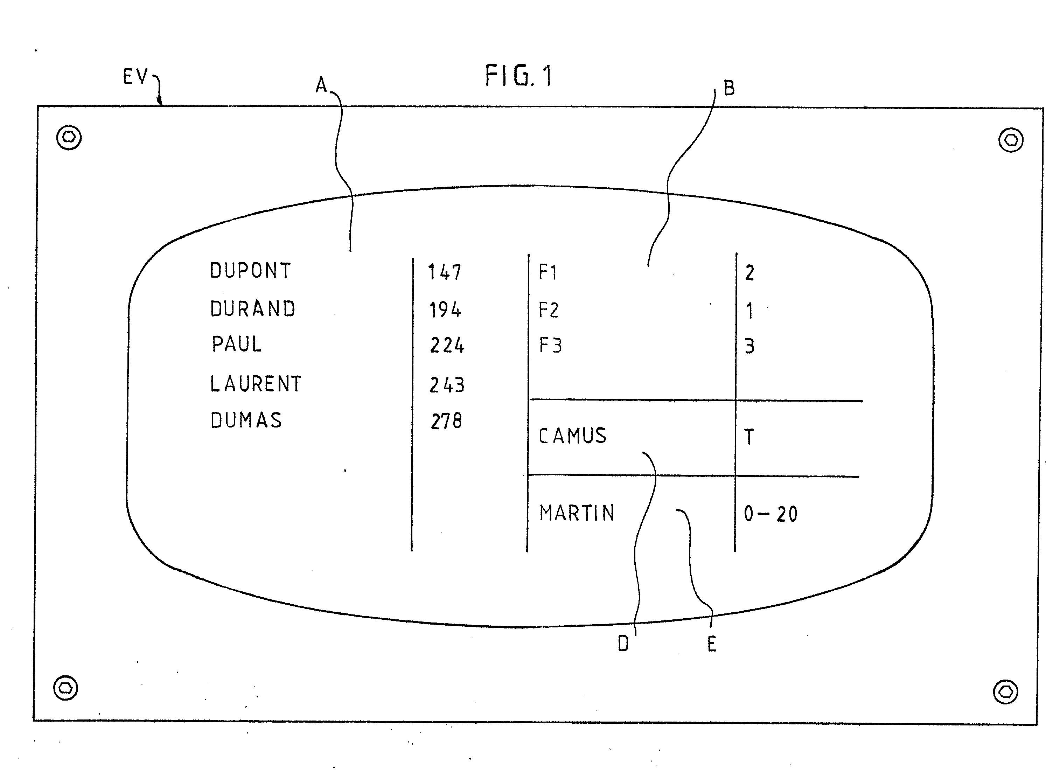

Le pupitre d'autocommutateur téléphonique conforme à l'invention comprend tout d'abord un panneau de visualisation alphanumérique EV représenté sur la figure 1 et qui peut être constitué, suivant le cas, d'un cathoscope, d'un écran à plasma, d'un écran à cristaux liquides d'afficheurs alphanumériques à diodes électroluminescentes.

Dans l'application particulière décrite ici, l'écran est capable d'afficher 16 lignes de 32 caractères ou espaces chacune. Cet écran est en outre partagé en quatre zones A, B, D et E, dont le rôle apparaîtra plus clairement par la suite.

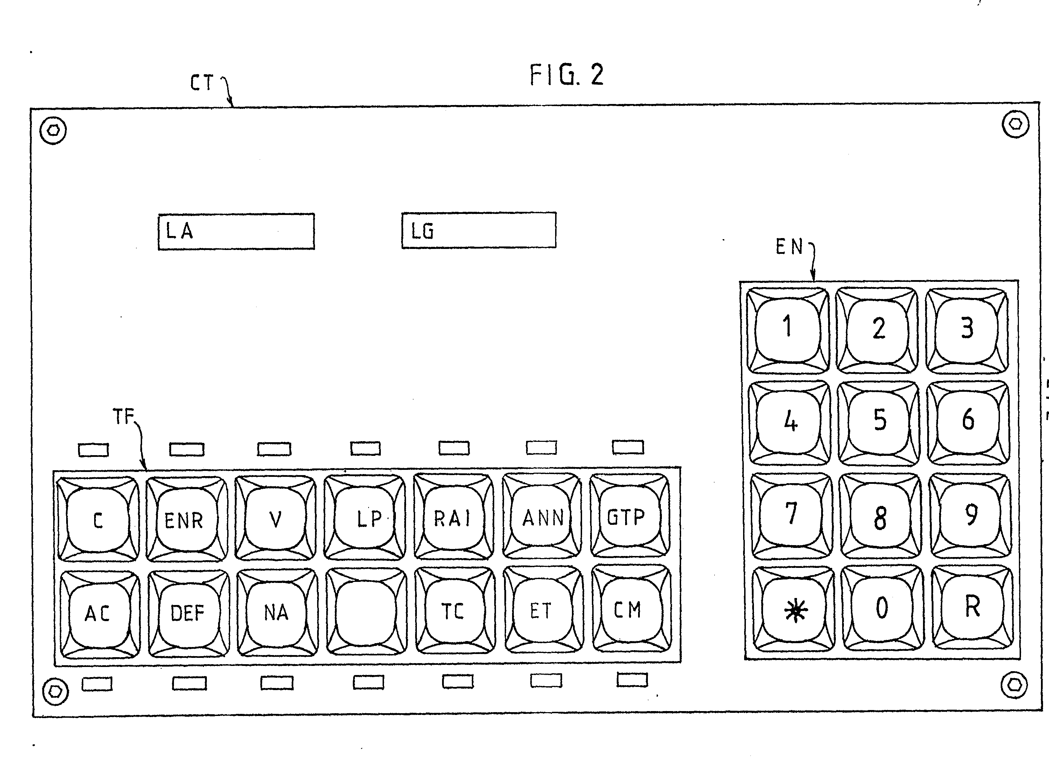

Le panneau de visualisation EV est associé à au moins un clavier à touches tel que celui représenté en CT sur la figure 2, et à au moins un combiné téléphonique. Dans la plupart des cas, les opérateurs travaillent simultanément avec deux combinés, de sorte que chaque pupitre comprendra un panneau de visualisation avec deux claviers CT associés chacun à un combiné.

Le clavier CT comporte tout d'abord un ensemble de touches de fonctions TF marquées respectivement C (conférence), ENR (enregistrement), V (veille), LP (ligne privée), RAI (réponse appel intérieur), ANN (annulation), GTP (garde, transfert, permutation de registre), AC (annulation conférence), DEF (défaut), NA (numérotation abrégée), TC (transfert combiné), ET (entrée en tiers) et CM (coupure microphone). Ce clavier comporte également un ensemble de touches de numérotation EN de 10 chiffres ordonnés selon la normalisation téléphonique, avec en plus une touche astérisque et une touche marquée R (répétition). Sur la face avant du clavier sont en outre prévus deux indicateurs dits de ligne active LA et de ligne de garde LG ayant chacun une capacité de 8 caractères alphanumériques.

L'installation est complétée par une électronique de gestion, non représentée, incorporant un microprocesseur et qui permet, selon une technique connue en soi, de réaliser des échanges d'ordres entre le pupitre et l'unité centrale à laquelle est relié le pupitre.

Le pupitre d'autocommutateur téléphonique qui vient d'être décrit fonctionne de la manière suivante :

En cas d'appel émanant d'un correspondant en ligne directe , le panneau de visualisation EV affiche en clair dans la zone A de l'écran l'identité de l'appelant avec son code particulier de réponse. L'opérateur peut alors répondre à l'un de ces appels en frappant sur l'ensemble de touches EN le code de réponse affiché en regard de l'appelant choisi. Cette manoeuvre établit automatiquement la communication et active l'indicateur LA dans lequel vient s'afficher l'identité de l'appelant ainsi sélectionné, tandis que  l'indication correspondante disparaît sur l'écran EV.

De même, en cas d'appel émanant d'un correspondant en ligne du réseau commuté, l'identité du faisceau d'appel concerné vient s'afficher dans la zone B de l'écran EV, avec en regard la quantité de lignes en appel pour chaque faisceau. Pour répondre à un tel appel, il suffit, comme précédemment, de frapper sur l'ensemble de touches EN un code particulier qui n'a pas besoin d'être affiché car il est supposé être parfaitement connu de l'opérateur.

Comme on l'a vu plus haut, le panneau de visualisation EV pourrait en variante être avantageusement constitué par un écran interactif de type connu en soi. Dans ce cas, l'actionnement de l'ensemble de touches EN est remplacé par un appui direct du doigt dans la zone de l'écran où

4

0075503

s'est manifesté l'appel. Cette action a pour effet de sélectionner la ligne, donc d'afficher les coordonnées de l'appelant ainsi sélectionné dans l'indicateur LA et de les effacer sur l'écran EV. Bien entendu, il n'est pas nécessaire alors de prévoir de code de réponse.

Dans le cas où c'est l'opérateur qui souhaite lancer un appel, il compose le numéro de son correspondant sur l'ensemble de touches EN, comme sur un clavier téléphonique ordinaire, le reste de la procédure étant identique à la sélection d'une ligne en appel arrivée. Si la ligne de ce correspondant est occupée, son identité apparaît dans la zone E de l'écran avec la mention O pour occupé et le numéro du poste occupant la ligne.

Pour effectuer un tranfert, l'opérateur met d'abord son correspondant en attente en actionnant la touche GTP (garde, transfert, permutation de registre),ce qui déplace le contenu de l'indicateur LA vers l'indicateur LG. L'opérateur peut alors,une fois le transfert réalisé, soit traiter l'un des appels visualisés sur l'écran EV, soit émettre un nouvel appel au moyen de l'ensemble de touches EN. On notera que l'identité du correspondant ainsi transféré apparaît automatiquement dans la zone D de l'écran EV avec la mention T pour transfert, sur tous les pupitres concernés par ledit transfert, signalant ainsi aux intéressés un appel qui est toujours considéré comme urgent.

Pour mettre fin à une communication, il suffit à l'opérateur d'actionner la touche ANN (annulation), ce qui a pour effet de libérer l'indicateur LA.

On voit donc en définitive que le pupitre d'autocommutateur téléphonique selon l'invention présente une très grande souplesse d'utilisation et permet notamment une hiérarchisation facile des appels ainsi qu'un traitement rapide des ordres, ce qui est primordial dans ce genre d'applications.

Revendications

1. Pupitre d'autocommutateur téléphonique, destiné notamment à l'exploitation de réseaux téléphoniques spécialisés dans les opérations bancaires ou les opérations de courtage de monnaies, de denrées ou de matières premières, caractérisé en ce qu'il comprend un panneau de visualisation alphanumérique (EV) sur lequel apparaissent en clair les identités des appelants.

2. Pupitre selon la renvendication 1, caractérisé en ce que le panneau de visualisation est associé à au moins un clavier à touches (CT) permettant entre autres de sélectionner à volonté l'un des appelants par frappe de son code qui figure également en clair sur ledit panneau.

3. Pupitre selon la revendication 1, caractérisé en ce que le panneau de visualisation (EV) est constitué par un écran interactif permettant de sélectionner l'appelant souhaité par simple pression du doigt dans la zone de l'écran où apparaît l'identité dudit appelant.

FIG. 1

EV    A    B

| DUPONT | 147 | F1 | 2 |
| DURAND | 194 | F2 | 1 |
| PAUL | 224 | F3 | 3 |
| LAURENT | 243 | | |
| DUMAS | 278 | | |
| | | CAMUS | T |
| | | MARTIN | 0 − 20 |

D    E

1/2

0075503

FIG. 2

0075503

Office européen
des brevets

**RAPPORT DE RECHERCHE EUROPEENNE**

Numéro de la demande

EP 82 40 1632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 04 M 3/62 |
| X | COMMUTATION & TRANSMISSION, vol. 2, no. 3, septembre 1980, pages 117-132, Paris (FR); J.CHARPENTIER et al.: "Les positions d'opératrice dans le systéme MT". *Page 122 - 125; figures 5-8* . | 1,2 | |
| | --- | | |
| A | FR-A-2 360 130 (LUSSATO) *Page 2, ligne 27 - page 4, ligne 35; figures* | 3 | |
| | --- | | |
| A | FR-A-1 488 795 (MINISTER OF AVIATION) *Page 2, colonne 2, ligne 3 - page 6, colonne 1, ligne 9; figures* | 3 | |
| | ----- | | DOMAINES TECHNIQUES RECHERCHES (Int. Cl. ³) |
| | | | H 04 M 3/62 |
| | | | H 04 M 3/64 |
| | | | H 04 M 5/20 |
| | | | H 04 M 5/18 |
| | | | G 06 F 3/037 |

Le présent rapport de recherche a été établi pour toutes les revendications

| Lieu de la recherche LA HAYE | Date d'achèvement de la recherche 14-12-1982 | Examinateur KEPPENS P.M.R. |
|---|---|---|